Europäisches Patentamt

**European Patent Office**

**Office européen des brevets**

(19)

(11) Publication number: **0 069 556**
**B1**

(12) **EUROPEAN PATENT SPECIFICATION**

(45) Date of publication of patent specification: **27.12.85**

(51) Int. Cl.⁴: **B 23 P 11/00**

(21) Application number: **82303478.0**

(22) Date of filing: **02.07.82**

(54) Method of attaching a tube to a plate.

<table>
<tr><td>(30) Priority: <b>02.07.81 US 280026</b></td><td>(73) Proprietor: <b>FORD MOTOR COMPANY LIMITED·</b><br><b>Eagle Way</b><br><b>Brentwood Essex CM13 3BW (GB)</b></td></tr>
<tr><td>(43) Date of publication of application:<br><b>12.01.83 Bulletin 83/02</b></td><td>(84) <b>GB</b><br>(73) Proprietor: <b>FORD-WERKE</b><br><b>AKTIENGESELLSCHAFT</b><br><b>Ottoplatz 2 Postfach 21 03 69</b><br><b>D-5000 Köln 21 (DE)</b></td></tr>
<tr><td>(45) Publication of the grant of the patent:<br><b>27.12.85 Bulletin 85/52</b></td><td>(84) <b>DE</b><br>(73) Proprietor: <b>FORD FRANCE SOCIETE ANONYME</b><br><b>344 Avenue Napoléon Bonaparte B.P. 307</b><br><b>F-92506 Rueil Malmaison Cedex (FR)</b></td></tr>
<tr><td>(84) Designated Contracting States:<br><b>DE FR GB IT</b></td><td>(84) <b>FR</b><br>(73) Proprietor: <b>Ford Motor Company</b><br><b>The American Road</b><br><b>Dearborn, MI 48121 (US)</b></td></tr>
<tr><td>(56) References cited:<br><b>DE-A-1 552 066</b><br><b>FR-A-2 238 545</b><br><b>GB-A-1 186 376</b><br><b>US-A-2 756 495</b></td><td>(84) <b>IT</b><br>(72) Inventor: <b>Rhodes, Eugene E.</b><br><b>45221 Harmony Lane</b><br><b>Belleville Michigan 48111 (US)</b></td></tr>
<tr><td></td><td>(74) Representative: <b>Messulam, Alec Moses et al</b><br><b>A. Messulam & Co. 24 Broadway</b><br><b>Leigh on Sea Essex SS9 1BN (GB)</b></td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a method of attaching a tube to a plate. Primarily, the invention finds utility in the attachment of radiator tubes to a radiator header.

As is well known in the art, the headers of a radiator form the entry and exit channels to a plurality of tubes which extend between the headers. The tubes have attached thereto a plurality of thin fin elements which are used in a well known manner to cool the fluid flowing through the tubes attached to the headers.

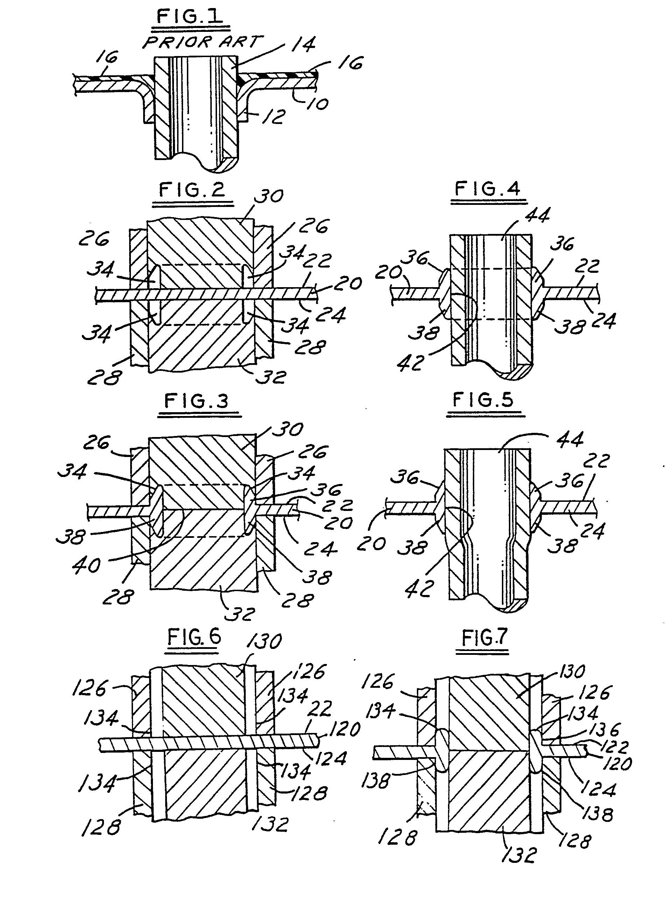

In accordance with the teachings of the prior art as shown in Figure 1, a header member 10 has a deformed ring-shaped portion 12 extending from one surface thereof. These ring-shaped portions 12 are formed by initially piercing the header member 10 and then deforming the ring-shaped portion 12 downwardly with a suitable deforming tool which is well known in the art. The header member 10 is, of course, made from a deformable material such as a metal or metal alloy. In radiator constructions, aluminium has found very extensive use because of its light weight and high thermal conductivity. A tube 14 extends through the ring-shaped portion 12 of the header member 10. This tube 14 is also formed of a deformable material and may be of the same material as forms the header member. The tube is bonded to the ring-shaped portion of the header member by drawing a deforming member down through the central axis of the tube, the tube initially being sized so as to fit loosely into the ring-shaped portion of the header member. When the tube 14 is deformed, it is brought into bonding contact with the ring-shaped portion of the header member.

It was originally hoped that this method of assembling a tube 14 with a header member 10 would produce fluid tight seals. However, in actual production use of the method it was found that in many instances the seal between the tube and the header member was not fluid tight and a leak would occur. In order to prevent such leaks from occurring, it was necessary to coat the joined members with a sealant material 16. It is readily apparent that the cost of such a sealant material and the cost of applying that sealant material adds to the cost of manufacture of such a unit. However, in order to ensure the realiability of a product in which tubes were joined to header members in the manner described above, it was necessary to incur the cost of the sealant material in order to be completely sure that the unit was fluid tight.

The invention seeks to provide a method of attaching a tube to a plate which is simple and efficient in operation, but which produces a fluid tight seal between the tube and the plate without the need for a sealant material.

According to the present invention, there is provided a method of attaching a tube to a plate formed of a deformable material, the plate having a first surface and a second surface separated by a thickness thereof, which attachment method is characterised by the steps of, forming at least one pair of retaining collars, one of said pair of retaining collars being formed on the first surface of the plate and the second of the said pair of retaining collars being formed on the second surface of the plate said pair of retaining collars being of the same general shape and having a common central axis, said retaining collars each having a portion thereof extending above the respective surface from which they are formed, interconnecting by an opening said pair of retaining collars formed on the first and the second surfaces of the plate, fitting a deformable tube in a position in said opening between said interconnected pair of retaining collars formed on the first and the second surfaces of the plate and deforming said deformable tube into engagement with said interconnected pair of retaining collars thereby to form a joint therebetween.

According to the second aspect of the invention, there is provided a method of attaching a tube to a header member formed of a deformable material, the header member having a first surface and a second surface separated by a thickness thereof, which method is characterised by the steps of, simultaneously applying along a common central axis a forming pressure to the first surface and the second surface of the header member at a position which is separated only a thickness of the header member, said forming pressure being applied to form on the first surface and on the second surface identically shaped retaining collars which surround said central axis about which said forming pressure is applied, said retaining collars each having a portion thereof extending above the respective surface from which they are formed, interconnecting by an opening said retaining collars formed on the first and the second surface of the header member, fitting a deformable metal or metal alloy tube in a position in said opening between said interconnected retaining collars formed on the first and the second surfaces of the header member, and deforming said deformable tube into engagement with said interconnected retaining collars formed on the first and the second surface of the header member thereby to form a fluid tight seal therebetween.

The invention will now be described further, by way of example, with reference to the accompanying drawings, in which:

Figure 1 is, as previously described, a cross-sectional view of a tube joined to a plate in accordance with a prior art method.

Figure 2 is a schematic representation of the initiation of an embodiment of the method of this invention.

Figure 3 is a schematic representation of the completion of the process that was initiated in Figure 2.

Figure 4 schematically illustrates an initial fitting of a tube to a plate which has been processed in accordance with the teachings of the method of this invention.

Figure 5 is a schematic illustration of the tube attached to the plate in accordance with the teachings of the method of this invention.

Figure 6 is a schematic representation of the initiation of a preferred embodiment of the method of this invention and,

Figure 7 is a schematic representation of the completion of the process that was initiated in Figure 6.

In Figure 2, a header member 20 is shown which has a first surface 22 and a second surface 24 spaced from one another by the thickness of the header member. The header member may be made from any deformable metal or metal alloy. In the preferred embodiment, the metal selected for the header member is aluminium.

The header member 20 is clamped between an upper clamping member 26 engaging the first surface 22 and a lower clamping member 28 engaging the second surface 24. An upper deforming tool 30 is centered for movement in the upper clamping member 26. In a similar manner, a lower deforming tool 32 is centered for movement in the lower clamping member 28. The upper deforming tool and lower deforming tool are movable along the same central axis. Both the upper deforming tool and the lower deforming tool have ring-shaped recessed zones 34—34 formed about the circumference of the portion of the tool engaging either the first surface 22 or the second surface 24 of the header member 20.

Reference is now made to Figure 3. While the upper clamping member 26 and the lower clamping member 28 provide clamping pressure on the first surface 22 and the second surface 24 respectively of the header member 20, the upper deforming tool 30 is moved downwardly along its axis and the lower deforming tool 32 is moved upwardly along its axis. The movement of the upper deforming tool and lower deforming tool toward one another causes the aluminium forming the header member to be deformed into the ring-shaped recessed zones 34—34 formed on the respective deforming tools. In this manner, an upper retaining collar 36 is formed on the first surface 22 of the header member 20, while in a similar fashion a lower retaining collar 38 is formed on the second surface 24 of the header member 20. The retaining collars have a portions extending above the respective surfaces from which they are formed.

In general, it is preferred that the retaining collars be of generally identical shape. However, this is not an absolute requirement for the method of this invention. For example, the retaining collar on the top surface could be larger than the one on the bottom surface, or the other way around, so long as one collar does not grow to use most of the deformed metal while the other collar contains little of the deformed metal therein.

As the upper deforming tool 30 and lower deforming tool 32 are brought to their rest positions upon completion of the deforming operation, there may be a thin skin of undeformed metal 40 left between the upper retaining collar 36 and the lower retaining collar 38. Thus, after the clamping member 26 and 28 and deforming tools 30 and 32 have been withdrawn from contact with the header member 20, the thin skin of undeformed metal 40, if it exists, should be removed. Most generally this skin of undeformed metal will be present, but in some cases all of the metal located between the deforming tools will be deformed into forming the upper retaining collar 36 and lower retaining collar 38. This thin skin may be removed by a drilling operation or by a metal punching operation, or, if thin enough, may simply be removed by pushing a properly sized hand tool through the thin skin. Once this thin skin is removed, the upper retaining collar 36 and lower retaining collar 38 are interconnected by an opening 42, shown only in Figures 4 and 5.

The next step of the method is illustrated in Figure 4. In this step, a deformable tube 44 is fitted in a position in the opening 42 between the upper retaining collar 36 and the lower retaining collar 38 of the header member 20. The deformable tube 44 is made from a deformable metal or metal alloy in its preferred construction. In accordance with the teachings of this preferred embodiment, the deformable tube is formed from aluminium, the same as the header member 20. The deformable tube has an outer diameter which is slightly less than the diameter of the opening 42 between the two retaining collars 36 and 38. In this manner, the deformable tube may be slipped into its position without a great deal of stress being brought to bear thereon.

The last step of this embodiment is shown in Figure 5. In this last step, as is well known in the art, a deforming tool is pulled out through the centre of the deformable tube 44 to deform the tube outwardly, thereby increasing its diameter. This deforming operation deforms the deformable tube into bonding contact with the upper retaining collar 36, the lower retaining collar 38, and the interconnecting portions thereof which are generally defined by the thickness of the header member 20 at the location of the opening 42 therethrough. This deforming step brings the portion of the deformable tube 44 associated with the upper retaining collar 36, the lower retaining collar 38, and the opening 42 therebetween into intimate physical bonding relationship. This intimate bonding relationship forms a joint between the tube and the header member 20. If sufficient force is used in deforming the tube, the joint formed between the tube and the header is substantially fluid tight so that it is unnecessary to apply any further sealant material in order to have a fluid tight seal between the tube 44 and the header member 20.

In Figure 6 there is seen a manner in which a preferred embodiment of the method of this invention is initiated. This embodiment is similar to the embodiment discussed in Figure 2, but it is slightly cheaper to carry out because the tooling involved in less complex. In this situation, a header member 120 is shown which has a first surface 122 and a second surface 124 spaced from one another by a thickness of the header member. The header member is clamped between an upper clamping member 126 engaging the first surface 122 thereof and a lower clamping member 128 engaging the second surface 124 thereof. An upper deforming tool 130 is centered for and movable within the upper clamping member 126. In a similar manner, a lower deforming tool 132 is centered and movable within the lower clamping member 128. The upper deforming tool and the lower deforming tool are movable along the same central axis. Both the upper deforming tool and the lower deforming tool are spaced by separation zones 134—134 from the upper clamping member and the lower clamping member, respectively.

Reference is now made to Figure 7. While the upper clamping member 126 and the lower clamping member 128 provide clamping pressure on the first surface 122 and second surface 124 respectively of the header member 120, the upper deforming tool 130 is moved downwardly along its axis and the lower deforming tool 132 is moved upwardly along its axis. The movement of the upper deforming tool and the lower deforming tool toward one another causes the aluminium forming the header member to be deformed into an upper retaining collar 136 on the first surface 122 of the header member 120, while in a similar fashion a lower retaining collar 138 is formed on the second surface 124 of the header member 120. The retaining collars have a portion thereof extending about the respective surface from which they are formed.

The rest of the method set forth herein is carried out in the same fashion as set forth with the description of the embodiment shown in Figures 2 and 3. There will be no need for repeating that description as it has already been covered in the discussion of Figures 4 and 5.

**Claims**

1. A method of attaching a tube to a plate formed of a deformable material, the plate having a first surface and a second surface separated by a thickness thereof, which attachment method is characterised by the steps of, forming at least one pair of retaining collars (36, 38), one of said pair of retaining collars (36) being formed on the first surface (22) of the plate and the second of the said pair of retaining collars (38) being formed on the second surface (24) of the plate (20) said pair of retaining collars being of the same general shape and having a common central axis, said retaining collars (36, 38) each having a portion thereof extending above the respective surface (22, 24) from which they are formed, interconnecting by an opening (42) said pair of retaining collars (36, 38) formed on the first and the second surfaces (22, 24) of the plate, fitting a deformable tube (44) in a position in said opening (42) between said interconnected pair of retaining collars formed on the first and the second surfaces of the plate and deforming said deformable tube (44) into engagement with said interconnected pair of retaining collars (36, 38) thereby to form a joint therebetween.

2. A method as claimed in claim 1, wherein the plate (20) is a header member formed of a deformable metal or metal alloy.

3. A method of attaching a tube to a header member formed of a deformable material, the header member having a first surface and a second surface separated by a thickness thereof, which method is characterised by the steps of, simultaneously applying along a common central axis a forming pressure to the first surface (22) and the second surface (24) of the header member (20) at a position which is separated only a thickness of the header member (20), said forming pressure being applied to form on the first surface (22) and on the second surface (24) identically shaped retaining collars (36, 38) which surround said central axis about which said forming pressure is applied, said retaining collars (36, 38) each having a portion thereof extending above the respective surface (22, 24) from which they are formed, interconnecting by an opening (42) said retaining collars (36, 38) formed on the first and the second surface (22, 24) of the header member (20), fitting a deformable metal or metal alloy tube (44) in a position in said opening (42) between said interconnected retaining collars (36, 38) formed on the first and the second surfaces (22, 24) of the header member (20), and deforming said deformable tube (44) into engagement with said interconnected retaining collars (36, 38) formed on the first and the second surface of the header member (20) thereby to form a fluid tight seal therebetween.

4. A method as claimed in claim 2 or 3, wherein a plurality of pairs of retaining collars (36, 38) are formed on the header member, each pair of retaining collars being formed along a common central axis.

5. A method as claimed in claim 2, 3 or 4, in which said deformable metal or metal alloy is aluminium or an aluminium based alloy.

6. A method as claimed in any preceding claim, in which said retaining collars (36, 38) are ring-shaped when viewed in a direction looking either directly at the first surface (22) or the second surface (24) of the member upon which such collars (36, 38) are formed.

**Revendications**

1. Méthode de fixation d'un tube à une plaque formée en un matériau déformable, la plaque ayant une première surface et une seconde surface séparées par une épaisseur de cette plaque, caractérisée par les étapes suivantes:
— formage d'au moins une paire de colliers de retenue (36, 38), un collier de ladite paire de colliers de retenue (36) étant formé sur la première surface (22) de la plaque et le second (38) de ladite paire de colliers de retenue étant formé sur la seconde surface (24) de la plaque (20), ladite paire de colliers de retenue ayant la même forme générale et ayant un axe central commun, lesdits colliers de retenue (36, 38) ayant chacun une partie d'eux-mêmes qui s'étend au-dessus de la surface respective (22, 24) depuis laquelle ils sont formés,

— interconnexion par une ouverture (42) de ladite paire de colliers de retenue (36, 38) formés sur la première et la seconde surface (22, 24) de la plaque,

— montage d'un tube déformable (44) dans une position dans ladite ouverture (42) entre ladite paire interconnectée de colliers de retenue formés sur la première et la seconde surface de la plaque, et

— déformation dudit tube déformable (44) en prise avec la paire interconnectée de colliers de retenue (36, 38), pour ainsi former entre eux un joint.

2. Méthode suivant la revendication 1, caractérisée en ce que la plaque (20) est une pièce faisant collecteur formée en un métal ou un alliage métallique déformable.

3. Méthode de fixation d'un tube à une pièce faisant collecteur formée en un matiériau déformable, la pièce faisant collecteur ayant une première surface et une seconde surface séparées par une épaisseur de cette plaque, caractérisée par les étapes suivantes:

— application simultanée le long d'un axe central commun d'une pression de formage à la première surface (22) et à la seconde surface (24) de la pièce faisant collecteur (20) en une position qui est séparée seulement par une certaine épaisseur de la pièce faisant collecteur (2), ladite pression de formage étant appliquée pour former sur la première surface (22) et sur la seconde surface (24) des colliers de retenue identiquement conformés (36, 38) qui entourent ledit axe central autour duquel ladite pression de formage est appliquée, lesdits colliers de retenue (36, 38) ayant chacun une partie d'eux-mêmes qui s'étend au-dessus de la surface respective (22, 24) depuis laquelle ils sont formés,

— interconnexion par une ouverture (42) desdits colliers de retenue (36, 38) formés sur la première et la seconde surface (22, 24) de la pièce faisant collecteur (20),

— montage d'un tube en métal ou en alliage métallique déformable (44) en une position dans ladite ouverture (42) entre lesdits colliers de retenue interconnectés (36, 38) formés sur la première et la seconde surface (22, 24) de la pièce faisant collecteur (20), et,

— déformation du tube déformable (44) en prise avec les colliers de retenue interconnectés (36, 38) formés sur la première et la seconde surface de la pièce faisant collecteur (20), pour ainsi former entre eux un joint étanche au fluide.

4. Méthode suivant la revendication 2 ou 3, caractérisée en ce qu'un certain nombre de paires de colliers de retenue (36, 38) sont formées sur la pièce faisant collecteur, chaque paire de colliers de retenue étant formée le long d'un axe central commun.

5. Méthode suivant la revendication 2, 3 ou 4, caractérisée en ce que le métal ou l'alliage métallique déformable est l'aluminium ou un alliage à base d'aluminium.

6. Méthode suivant l'une quelconque des revendications précédentes, caractérisée en ce que lesdits colliers de retenue (36, 38) sont en forme d'anneau lorsqu'on regarde dans une direction faisant face, soit directement à la première surface (22), soit à la seconde surface (24) de la pièce sur laquelle lesdits colliers (36, 38) sont formés.

**Patentansprüche**

1. Eine Methode zur Befestigung eines Rohrs an einer Platte, aus verformbarem Material gefertigt, wobei die Platte eine erste Oberfläche und eine zweite Oberfläche aufweist, die im Abstand einer Wanddicke voneinander angeordnet sind, und wobei die Befestigungsmethode dadurch gekennzeichnet ist, daß zumindest ein Paar Halteringe (36, 38) ausgeformt ist, wobei einer der genannten Halteringe (36) auf der ersten Oberfläche (22) der Platte und der zweite der genannten Halteringe (38) auf der zweiten Oberfläche (24) der Platte (20) ausgeformt ist und das genannte Paar Halteringe im Prinzip die gleiche Form und eine gemeinsame Mittelachse aufweist, wobei ein Teil eines jeden Halterings über die entsprechende Oberfläche (22, 24), aus der sie geformt sind, hinausragt, und wobei das genannte Paar Halteringe (36, 38), das auf den ersten und zweiten Oberflächen (22, 24) der Platte ausgeformt ist, über eine Öffnung (42) miteinander in Verbindung steht, so daß ein verformbares Rohr (44) in einer Stellung in der genannten Öffnung (42) zwischen dem genannten, miteinander in Verbindung stehenden und auf den ersten und zweiten Oberflächen der Platte ausgeformten Paar Halteringe befestigt und das genannte verformbare Rohr (44) mit dem genannten, miteinander in Verbindung stehenden Paar Halteringe (36, 38) fest verformt ist und dadurch eine Verbindung zwischen ihnen hergestellt wird.

2. Eine Methode gemäß Anspruch 1, wobei es sich bei der Platte (20) um einen aus verformbarem Metall oder Metallegierung gebildeten Sammler handelt.

3. Eine Methode zur Befestigung eines Rohrs an einem Sammler, aus verformbarem Material gefertigt, wobei der Sammler eine erste Oberfläche und eine zweite Oberfläche aufweist, die im Abstand einer Wanddicke voneinander angeordnet sind, und wobei die Befestigungsmethode dadurch gekennzeichnet ist, daß entlang einer gemeinsamen Mittelachse ein Verformungsdruck gleichzeitig auf die erste Oberfläche (22) und die zweite Oberfläche (24) des Sammlers (20) an einer Stelle ausgeübt wird, die sich nur in einem der Wanddicke des Sammlers (20) entsprechenden Abstand befindet, wobei der genannte Verformungsdruck ausgeübt wird, um auf der ersten Oberfläche (22) und auf der zweiten Oberfläche (24) identisch ausgeformte Halteringe (36, 38) auszuformen, die die genannte Mittelachse umgeben, über die der genannte Verformungsdruck ausgeübt wird, wobei ein Teil eines jeden der genannten Halteringe (36, 38) über die entsprechende Oberfläche (22, 24), aus der sie geformt sind, hinausragt, und wobei die genannten Halteringe (36, 38), die auf der ersten und zweiten Oberfläche (22, 24) des Sammlers (20) ausgeformt sind, über eine Öffnung (42) in Verbindung stehen, so daß ein Rohr (44) aus verformbarem Metall oder Metallegierung in einer Stellung in der genannten Öffnung (42) zwischen den genannten, miteinander in Verbindung stehenden und auf den ersten und zweiten Oberflächen (22, 24) des Sammlers (20) ausgeformten Halteringen (36, 38) befestigt und das genannte verformbare Rohr (44) mit den genannten, miteinander in Verbindung stehenden und auf der ersten und zweiten Oberfläche des Sammlers (20) ausgeformten Halteringen (36, 38) fest verformt ist, so daß dadurch eine flüssigkeitsdichte Abdichtung zwischen ihnen entsteht.

4. Eine Methode gemäß Anspruch 2 oder 3, wobei mehrere Paare Halteringe (36, 38) am Sammler ausgeformt sind und jedes Paar Halteringe entlang einer gemeinsamen Mittelachse angeordnet ist.

5. Eine Methode gemäß Anspruch 2, 3 oder 4, wobei es sich bei dem genannten verformbaren Metall oder Metallegierung um Aluminium oder eine Legierung auf Aluminiumbasis handelt.

6. Eine Methode gemäß irgendeinem der vorstehenden Ansprüche, wobei die genannten Halteringe (36, 38) ringförmig ausgebildet sind, wenn man sie entweder direkt über die erste Oberfläche (22) oder die zweite Oberfläche (24) des Sammlers, auf dem diese Ringe (36, 38) ausgeformt sind, betrachtet.

FIG.1
PRIOR ART

FIG.2

FIG.4

FIG.3

FIG.5

FIG.6

FIG.7